# EUROPEAN PATENT APPLICATION

(11) **EP 4 436 281 A1**
(43) Date of publication of application: **25.09.2024**
(21) Application number: 21964382.2
(22) Date of filing: 18.11.2021
(51) Int. Cl.: H04W 72/04, H04W 72/12

(54) **METHOD AND APPARATUS FOR TRANSMITTING REFERENCE SIGNAL FOR POSITIONING PURPOSES, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2021/131562
(87) International publication number: WO 2023/087225

(57) **Abstract**

The present disclosure relates to a method and apparatus for transmitting a reference signal for positioning purposes, and a storage medium. The method for transmitting a reference signal for positioning purposes is applied to a terminal, and comprises: acquiring first information, wherein the first information is used for indicating a first carrier group for transmitting a reference signal for positioning purposes, and the first carrier group comprises at least two carriers. By means of the present disclosure, the precision of positioning can be improved.

## Description

### TECHNICAL FIELD

The present disclosure relates to a field of communication technologies, and particularly to a method and an apparatus for transmitting a reference signal for positioning, and a storage medium.

### BACKGROUND

A plurality of positioning technologies are introduced in 5G R16, which may achieve positioning of a terminal. For some of the positioning technologies, some reference signals for positioning are defined in a communication system. For a downlink, a positioning reference signal (PRS) is defined. For an uplink, a sounding reference signal (SRS) for positioning measurement is introduced.

In related art, the reference signal for positioning is transmitted via a frequency layer, which however cannot achieve a sufficient positioning accuracy.

### SUMMARY

A method and an apparatus for transmitting a reference signal for positioning, and a storage medium are provided in the present disclosure, to overcome problems existing in the related art.

According to a first aspect of embodiments of the present disclosure, a method for transmitting a reference signal for positioning is provided. The method is applied to a terminal, and includes: acquiring first information, in which the first information indicates a first carrier group for transmitting the reference signal for positioning, and the first carrier group includes at least two carriers.

In an implementation, the method further includes: receiving second information, in which the second information indicates a priority for transmission of the reference signal for positioning relative to other channel/signal on each of the at least two carriers.

In an embodiment, a priority for transmission of the reference signal for positioning on each of the at least two carriers is identical.

In an embodiment, priorities for transmission of the reference signal for positioning on different carriers of the at least two carriers are different.

In an implementation, the method further includes: determining a second carrier group from the first carrier group, in which a priority of transmitting the reference signal for positioning is higher than a priority of transmitting the other channel/signal on each carrier in the second carrier group.

In an implementation, the method further includes: in response to determining a condition for transmitting the reference signal for positioning is satisfied, transmitting the reference signal for positioning via the second carrier group.

In an implementation, the reference signal for positioning includes a downlink reference signal for positioning, and transmitting the reference signal for positioning via the second carrier group includes: receiving the downlink reference signal for positioning on the each carrier in the second carrier group; and measuring the downlink reference signal for positioning, and reporting a measurement result and second carrier group information, in which the second carrier group information includes a carrier group identifier and a carrier identifier of the each carrier included in the second carrier group.

In an implementation, the reference signal for positioning includes an uplink reference signal for positioning, and transmitting the reference signal for positioning via the second carrier group includes: transmitting the uplink reference signal for positioning on the each carrier in the second carrier group.

In an implementation, the method further includes: in response to determining a condition for transmitting the reference signal for positioning is not satisfied, disabling transmission of the reference signal for positioning via the second carrier group.

In an implementation, the condition includes at least one of:
a sum of carrier bandwidths of the second carrier group being greater than or equal to a first threshold value; a ratio of a sum of carrier bandwidths of the second carrier group to a sum of carrier bandwidths of the first carrier group being greater than or equal to a second threshold value; a number of intervals between carriers in the second carrier group being less than or equal to a third threshold value; a frequency domain interval value between carriers in the second carrier group being less than or equal to a fourth threshold value; or there being a combination of carriers for transmitting the reference signal for positioning supported by the terminal in the second carrier group.

In an implementation, acquiring the first information includes: acquiring the first information from a core network (CN) device.

In an implementation, acquiring the second information includes: receiving the second information from a radio access network (RAN) device.

In an implementation, the other channel/signal includes at least one of:
a synchronization signal and physical broadcast channel (PBCH) block (SSB) of a serving cell, a SSB of a neighbor cell, a physical downlink control channel (PDCCH) and/or a physical downlink shared channel (PDSCH) for an ultra-reliable and low latency communications (URLLC) service, a PDCCH and/or a PDSCH for a service other than the URLLC service, a demodulation reference signal (DMRS), a channel state information reference signal (CSI-RS), a physical uplink control channel (PUCCH) and/or a physical uplink shared channel (PUSCH), or a physical random access channel (PRACH).

In an implementation, at least one of the first threshold value, the second threshold value, the third threshold value or the fourth threshold value is determined based on one of:
indication information received from a CN device; indication information received from a RAN device; or a threshold value stored in the terminal.

In an implementation, the method further includes: sending at least one piece of carrier combination information for transmitting the reference signal for positioning supported by the terminal to a CN device or a RAN device, in which the carrier combination information includes a carrier combination identifier or a carrier identifier of each carrier included in a carrier combination.

According to a second aspect of embodiments of the present disclosure, a method for transmitting a reference signal for positioning is provided. The method for transmitting the reference signal for positioning is applied to a RAN device, and includes: sending second information to a terminal, in which the second information indicates a priority for transmission of the reference signal for positioning relative to other channel/signal on each of at least two carriers in a first carrier group.

In an embodiment, a priority for transmission of the reference signal for positioning on each of the at least two carriers is identical.

In an embodiment, priorities for transmission of the reference signal for positioning on different carriers of the at least two carriers are different.

In an implementation, the method further includes: determining a second carrier group from the first carrier group, in which a priority of transmitting the reference signal for positioning is higher than a priority of transmitting the other channel/signal on each carrier in the second carrier group.

In an implementation, the method further includes: in response to determining a condition for transmitting the reference signal for positioning is satisfied, transmitting the reference signal for positioning via the second carrier group.

In an implementation, the reference signal for positioning includes a downlink reference signal for positioning, and transmitting the reference signal for positioning via the second carrier group includes: sending the downlink reference signal for positioning on the each carrier in the second carrier group; and acquiring a measurement result of the downlink reference signal for positioning reported by the terminal and second carrier group information, in which the second carrier group information includes a carrier group identifier and a carrier identifier of the each carrier included in the second carrier group.

In an implementation, the reference signal for positioning includes an uplink reference signal for positioning, and transmitting the reference signal for positioning via the second carrier group includes: receiving the uplink reference signal for positioning on the each carrier in the second carrier group; and measuring the uplink reference signal for positioning received on the each carrier in the second carrier group, and reporting a measurement result and second carrier group information, in which the second carrier group information includes a carrier group identifier and a carrier identifier of the each carrier included in the second carrier group.

In an implementation, the method further includes: in response to determining a condition for transmitting the reference signal for positioning is not satisfied, disabling transmission of the reference signal for positioning via the second carrier group.

In an implementation, the condition includes at least one of: a sum of carrier bandwidths of the second carrier group being greater than or equal to a first threshold value; a ratio of a sum of carrier bandwidths of the second carrier group to a sum of carrier bandwidths of the first carrier group being greater than or equal to a second threshold value; a number of intervals between carriers in the second carrier group being less than or equal to a third threshold value; a frequency domain interval value between carriers in the second carrier group being less than or equal to a fourth threshold value; or there being a combination of carriers for transmitting the reference signal for positioning supported by the terminal in the second carrier group.

In an implementation, the other channel/signal includes at least one of:
a SSB of a serving cell, a SSB of a neighbor cell, aPDCCH and/or a PDSCH for a URLLC service, a PDCCH and/or a PDSCH for a service other than the URLLC service, a DMRS, a CSI-RS, a PUCCH and/or a PUSCH, or a PRACH.

In an implementation, at least one of the first threshold value, the second threshold value, the third threshold value or the fourth threshold value is determined based on one of: indication information received from a CN device; terminal capability information received; or a threshold default value specified in a protocol.

In an implementation, the method further includes: receiving at least one piece of carrier combination information from the terminal, in which the carrier combination information is a carrier group for transmitting the reference signal for positioning supported by the terminal, and includes a carrier combination identifier or a carrier identifier of each carrier included in a carrier combination.

According to a third aspect of embodiments of the present disclosure, a method for transmitting a reference signal for positioning is provided. The method is applied to a CN device, and includes: sending first information to the terminal, in which the first information indicates a first carrier group for transmitting the reference signal for positioning, and the first carrier group includes at least two carriers.

In an implementation, the method further includes: acquiring a measurement result when transmitting the reference signal for positioning based on a second carrier group, and acquiring a carrier group identifier of the second carrier group and a carrier identifier of each carrier included in the second carrier group.

In an implementation, a priority of transmitting the reference signal for positioning is higher than a priority of transmitting the other channel/signal on each carrier in the second carrier group.

In an implementation, the method further includes: receiving at least one piece of carrier combination information from the terminal, in which the carrier combination information is a carrier group for transmitting the reference signal for positioning supported by the terminal, and includes a carrier combination identifier or a carrier identifier of each carrier included in a carrier combination.

In an implementation, the reference signal for positioning includes a downlink reference signal for positioning and/or an uplink reference signal for positioning.

According to a fourth aspect of embodiments of present disclosure, an apparatus for transmitting a reference signal for positioning is provided, and includes:

an acquiring unit, configured to acquire first information, in which the first information indicates a first carrier group for transmitting the reference signal for positioning, and the first carrier group includes at least two carriers.

In an implementation, the acquiring unit is further configured to receive second information, in which the second information indicates a priority for transmission of the reference signal for positioning relative to other channel/signal on each of the at least two carriers.

In an embodiment, a priority for transmission of the reference signal for positioning on each of the at least two carriers is identical.

In an embodiment, priorities for transmission of the reference signal for positioning on different carriers of the at least two carriers are different.

In an implementation, the apparatus for transmitting the reference signal for positioning further includes a processing unit. The processing unit is configured to: determine a second carrier group from the first carrier group, in which a priority of transmitting the reference signal for positioning is higher than a priority of transmitting the other channel/signal on each carrier in the second carrier group.

In an implementation, the apparatus for transmitting the reference signal for positioning further includes a processing unit, and in response to determining a condition for transmitting the reference signal for positioning is satisfied, the processing unit transmits the reference signal for positioning via the second carrier group.

In an implementation, the reference signal for positioning includes a downlink reference signal for positioning, and the acquiring unit is configured to receive the downlink reference signal for positioning on the each carrier in the second carrier group. The apparatus for transmitting the reference signal for positioning further includes a sending unit, and the sending unit is configured to measure the downlink reference signal for positioning, and report a measurement result and second carrier group information, in which the second carrier group information includes a carrier group identifier and a carrier identifier of the each carrier included in the second carrier group.

In an implementation, the reference signal for positioning includes an uplink reference signal for positioning, and the apparatus for transmitting the reference signal for positioning further includes a sending unit, and the sending unit is configured to receive the uplink reference signal for positioning on the each carrier in the second carrier group.

In an implementation, the apparatus for transmitting the reference signal for positioning further includes a processing unit, and in response to determining a condition for transmitting the reference signal for positioning is not satisfied, the processing unit disables transmission of the reference signal for positioning via the second carrier group.

In an implementation, the condition includes at least one of:
a sum of carrier bandwidths of the second carrier group being greater than or equal to a first threshold value; a ratio of a sum of carrier bandwidths of the second carrier group to a sum of carrier bandwidths of the first carrier group being greater than or equal to a second threshold value; a number of intervals between carriers in the second carrier group being less than or equal to a third threshold value; a frequency domain interval value between carriers in the second carrier group being less than or equal to a fourth threshold value; or there being a combination of carriers for transmitting the reference signal for positioning supported by the terminal in the second carrier group.

In an implementation, the acquiring unit is configured to acquire the first information from a CN device.

In an implementation, the acquiring unit is configured to receive the second information from a RAN device.

In an implementation, the other channel/signal includes at least one of:
a SSB of a serving cell, a SSB of a neighbor cell, aPDCCH and/or a PDSCH for a URLLC service, a PDCCH and/or a PDSCH for a service other than the URLLC service, a DMRS, a CSI-RS, a PUCCH and/or a PUSCH, or a PRACH.

In an implementation, at least one of the first threshold value, the second threshold value, the third threshold value or the fourth threshold value is determined based on one of:
indication information received from a CN device; indication information received from a RAN device; or a threshold value stored in the terminal.

In an implementation, the apparatus for transmitting the reference signal for positioning further includes a sending unit, and the sending unit is configured to send at least one piece of carrier combination information for transmitting the reference signal for positioning supported by the terminal to a CN device or a RAN device, in which the carrier combination information includes a carrier combination identifier or a carrier identifier of each carrier included in a carrier combination.

According to a fifth aspect of embodiments of present disclosure, an apparatus for transmitting a reference signal for positioning is provided, and includes:
a sending unit, configured to send second information to a terminal, in which the second information indicates a priority for transmission of the reference signal for positioning relative to other channel/signal on each of at least two carriers in a first carrier group.

In an embodiment, a priority for transmission of the reference signal for positioning on each of the at least two carriers is identical.

In an embodiment, priorities for transmission of the reference signal for positioning on different carriers of the at least two carriers are different.

In an implementation, the sending unit is further configured to: determine a second carrier group from the first carrier group, in which a priority of transmitting the reference signal for positioning is higher than a priority of transmitting the other channel/signal on each carrier in the second carrier group.

In an implementation, the sending unit is further configured to: in response to determining a condition for transmitting the reference signal for positioning is satisfied, transmit the reference signal for positioning via the second carrier group.

In an implementation, the reference signal for positioning includes a downlink reference signal for positioning, and the sending unit is further configured to send the downlink reference signal for positioning on the each carrier in the second carrier group. The apparatus for transmitting the reference signal for positioning further includes a receiving unit, and the receiving unit is configured to acquire a measurement result of the downlink reference signal for positioning reported by the terminal and second carrier group information, in which the second carrier group information includes a carrier group identifier and a carrier identifier of the each carrier included in the second carrier group.

In an implementation, the reference signal for positioning includes an uplink reference signal for positioning, and the apparatus for transmitting the reference signal for positioning further includes a receiving unit, and the receiving unit is configured to receive the uplink reference signal for positioning on the each carrier in the second carrier group. The sending unit is configured to measure the uplink reference signal for positioning received on the each carrier in the second carrier group, and report a measurement result and second carrier group information, in which the second carrier group information includes a carrier group identifier and a carrier identifier of the each carrier included in the second carrier group.

In an implementation, in response to determining a condition for transmitting the reference signal for positioning is not satisfied, the sending unit disables transmission of the reference signal for positioning via the second carrier group.

In an implementation, the condition includes at least one of: a sum of carrier bandwidths of the second carrier group being greater than or equal to a first threshold value; a ratio of a sum of carrier bandwidths of the second carrier group to a sum of carrier bandwidths of the first carrier group being greater than or equal to a second threshold value; a number of intervals between carriers in the second carrier group being less than or equal to a third threshold value; a frequency domain interval value between carriers in the second carrier group being less than or equal to a fourth threshold value; or there being a combination of carriers for transmitting the reference signal for positioning supported by the terminal in the second carrier group.

In an implementation, the other channel/signal includes at least one of:
a SSB of a serving cell, a SSB of a neighbor cell, aPDCCH and/or a PDSCH for a URLLC service, a PDCCH and/or a PDSCH for a service other than the URLLC service, a DMRS, a CSI-RS, a PUCCH and/or a PUSCH, or a PRACH.

In an implementation, at least one of the first threshold value, the second threshold value, the third threshold value or the fourth threshold value is determined based on one of: indication information received from a CN device; terminal capability information received; or a threshold default value specified in a protocol.

In an implementation, the apparatus for transmitting the reference signal for positioning further includes a receiving unit, and the receiving unit is configured to receive at least one piece of carrier combination information from the terminal, in which the carrier combination information is a carrier group for transmitting the reference signal for positioning supported by the terminal, and includes a carrier combination identifier or a carrier identifier of each carrier included in a carrier combination.

According to a sixth aspect of embodiments of present disclosure, an apparatus for transmitting a reference signal for positioning is provided, and includes:
a sending unit, configured to send first information to a terminal, in which the first information indicates a first carrier group for transmitting the reference signal for positioning, and the first carrier group includes at least two carriers.

In an implementation, the apparatus for transmitting the reference signal for positioning further includes a receiving unit, and the receiving unit is configured to acquire a measurement result when transmitting the reference signal for positioning based on a second carrier group, and acquire a carrier group identifier of the second carrier group and a carrier identifier of each carrier included in the second carrier group.

In an implementation, a priority of transmitting the reference signal for positioning is higher than a priority of transmitting the other channel/signal on each carrier in the second carrier group.

In an implementation, the apparatus for transmitting the reference signal for positioning further includes a receiving unit, and the receiving unit is configured to receive at least one piece of carrier combination information from the terminal, in which the carrier combination information is a carrier group for transmitting the reference signal for positioning supported by the terminal, and includes a carrier combination identifier or a carrier identifier of each carrier included in a carrier combination.

In an implementation, the reference signal for positioning includes a downlink reference signal for positioning and/or an uplink reference signal for positioning.

According to a seventh aspect of embodiments of present disclosure, a device for transmitting a reference signal for positioning is provided, and includes:
a processor; and a memory for storing instructions executable by the processor;
in which the processor is configured to perform the method according to the first aspect or any one implementation of the first aspect.

According to an eighth aspect of embodiments of present disclosure, a device for transmitting a reference signal for positioning is provided, and includes:
a processor; and a memory for storing instructions executable by the processor;
in which the processor is configured to perform the method according to the second aspect or any one implementation of the second aspect.

According to a ninth aspect of embodiments of present disclosure, a device for transmitting a reference signal for positioning is provided, and includes:
a processor; and a memory for storing instructions executable by the processor;
in which the processor is configured to perform the method according to the third aspect or any one implementation of the third aspect.

According to a tenth aspect of embodiments of the present disclosure, a storage medium storing instructions is provided. When the instructions in the storage medium are executed by a processor, the method according to the first aspect or any one implementation of the first aspect is implemented.

According to an eleventh aspect of embodiments of the present disclosure, a storage medium storing instructions is provided. When the instructions in the storage medium are executed by a processor, the method according to the second aspect or any one implementation of the second aspect is implemented.

According to a twelfth aspect of embodiments of the present disclosure, a storage medium storing instructions is provided. When the instructions in the storage medium are executed by a processor, the method according to the second aspect or any one implementation of the second aspect is implemented.

The technical solution according to embodiments of the present disclosure may include the following beneficial effect: the first information acquired by the terminal indicates the first carrier group for transmitting the reference signal for positioning, and the first carrier group includes at least two carriers, so that transmission of the reference signal for positioning may be achieved based on the at least two carriers, that is, transmission of the reference signal for positioning may be achieved via a carrier aggregation, which further enhances the positioning accuracy.

It should be noted that, the details above and in the following are exemplary and explanatory, and do not constitute the limitation on the present disclosure.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.
FIG. 1 is a diagram illustrating a wireless communication system according to an example embodiment.
FIG. 2 is a flowchart illustrating a method for transmitting a reference signal for positioning according to an example embodiment.
FIG. 3 is a flowchart illustrating a method for transmitting a reference signal for positioning according to an example embodiment.
FIG. 4 is a flowchart illustrating a method for transmitting a reference signal for positioning according to an example embodiment.
FIG. 5 is a flowchart illustrating a method for transmitting a reference signal for positioning according to an example embodiment.
FIG. 6 is a flowchart illustrating a method for transmitting a reference signal for positioning according to an example embodiment.
FIG. 7 is a flowchart illustrating a method for transmitting a reference signal for positioning according to an example embodiment.
FIG. 8 is a flowchart illustrating a method for transmitting a reference signal for positioning according to an example embodiment.
FIG. 9 is a flowchart illustrating a method for transmitting a reference signal for positioning according to an example embodiment.
FIG. 10 is a flowchart illustrating a method for transmitting a reference signal for positioning according to an example embodiment.
FIG. 11 is a flowchart illustrating a method for transmitting a reference signal for positioning according to an example embodiment.
FIG. 12 is a block diagram illustrating an apparatus for transmitting a reference signal for positioning according to an example embodiment.
FIG. 13 is a block diagram illustrating an apparatus for transmitting a reference signal for positioning according to an example embodiment.
FIG. 14 is a block diagram illustrating an apparatus for transmitting a reference signal for positioning according to an example embodiment.
FIG. 15 is a block diagram illustrating a device for transmitting a reference signal for positioning according to an example embodiment.
FIG. 16 is a block diagram illustrating a device for transmitting a reference signal for positioning according to an example embodiment.

### DETAILED DESCRIPTION

The example embodiments will be described here, examples of which are shown in accompanying drawings. When the following descriptions refer to the accompanying drawings, same numbers in different drawings represent same or similar elements unless otherwise indicated. The implementations described in the following exemplary embodiments do not represent all possible implementations consistent with embodiments of the present disclosure.

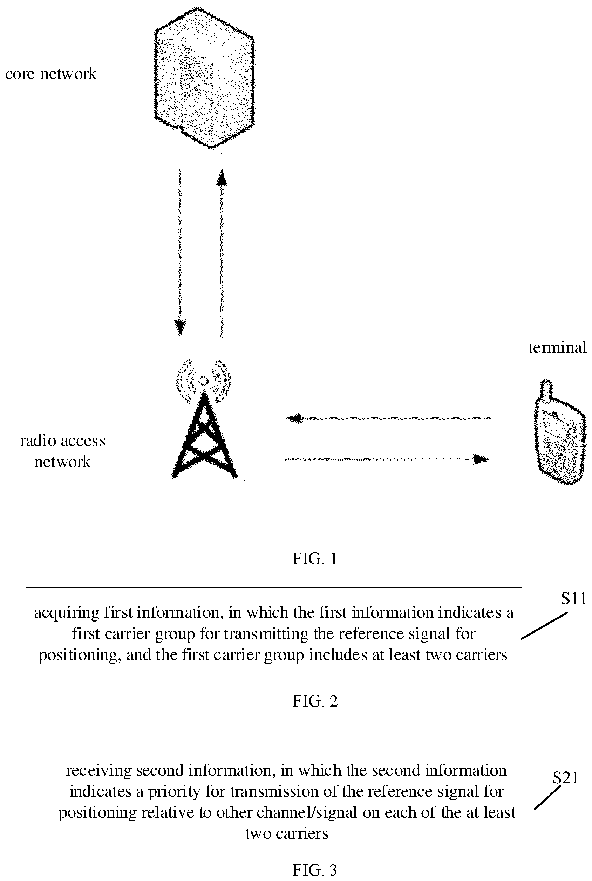

A method for transmitting a reference signal for positioning is provided in the disclosure. The method is applicable to a wireless communication system as illustrated in FIG. 1. As illustrated in FIG. 1, a terminal is accessed to a radio access network (RAN) via a RAN network device such as a base station. The RAN network device and a core network (CN) device complete backhaul of data and forward delivery of data, to perform various communication services.

It may be understood that, the wireless communication system is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA) and carrier sense multiple access with collision avoidance. The network may be divided into a 2G (generation) network, a 3G network, a 4G network or a future evolution network (such as 5G network) based on capacities, rates, latencies and other factors of different networks. For example, the 5G network may be referred to as a new radio (NR) network. For ease of description, the wireless communication network is simply referred to as a network or a system in the disclosure sometimes. The network in the disclosure includes a RAN and a CN. A network device may be included in the network. The network device, for example, may be a wireless network device, a CN device, etc. The wireless network device may be referred to as a base station (BS). In the network, the network device provides a network service for the terminal, and different operators may provide different network services for the terminal, which may be understood that different operators correspond to different operator networks. For example, in SGNR, the wireless network device is a RAN device, which may be referred to as a gNB. The gNB may be embodied as at least one transmission reception point (TRP). The CN device includes a location management function (LMF) network element. Optionally, the LMF network element includes a location server. The location server may be implemented as any one of the LMF, an enhanced serving mobile location centre (E-SMLC), a secure user plane location (SUPL), or an SUPL location platform (SUPL SLP).

Further, the terminal involved in the disclosure sometimes may be referred to as a terminal device, a user equipment (UE), a mobile terminal (MT), etc., which is a device that provides voice and/or data connectivity to a user. For example, the terminal may be a handheld device with a wireless connection function or a vehicle-mounted device, etc. At present, some examples of the terminal include, for example, a mobile phone, a pocket personal computer (PPC), a palm computer, a personal digital assistant (PDA), a notebook computer, a tablet computer, a wearable device, or a vehicle-mounted device. In embodiments of the present disclosure, it is illustrated by taking the terminal being referred to as a UE for example.

A plurality of positioning technologies are introduced in 5G R16, which may achieve positioning of the UE. For some of the positioning technologies, positioning is performed based on the reference signal for positioning. In related art, each reference signal for positioning occupies one frequency layer for transmission. However, the one frequency layer may not achieve a sufficient positioning accuracy. There is a problem that needs to be solved how to transmit the reference signal for positioning, so as to enhance the positioning accuracy.

For this purpose, a method for transmitting the reference signal for positioning is provided in embodiments of the disclosure, where the reference signal for positioning is transmitted via the carrier aggregation, to enhance the positioning accuracy.

The reference signal for positioning involved in embodiments of the disclosure may include a downlink reference signal for positioning such as a positioning reference signal (PRS) or may include an uplink reference signal for positioning such as a sounding reference signal (SRS), or other reference signals for positioning, for example, a reference signal for positioning that is newly introduced in future.

FIG. 2 is a flowchart illustrating a method for transmitting a reference signal for positioning according to an example embodiment. The method for transmitting the reference signal for positioning may be implemented alone or in combination with other embodiments of the disclosure. As illustrated in FIG. 2, the method for transmitting the reference signal for positioning is applied to a terminal. The method includes the following steps.

At S 11, first information is acquired. The first information indicates a first carrier group for transmitting the reference signal for positioning. The first carrier group includes at least two carriers.

In embodiments of the disclosure, the first information may be understood as configuration information of the reference signal for positioning. The first information includes carrier information required for transmission of the reference signal for positioning.

In embodiments of the present disclosure, the carrier information indicated in the first information includes a carrier group configured for transmission of the reference signal for positioning, which is referred to as a first carrier group. The first carrier group includes a plurality of carriers, which may be understood as including at least two carriers.

In embodiments of the present disclosure, the first information acquired by the terminal includes the first carrier group. The first carrier group includes a plurality of carriers, so that the reference signal for positioning may be transmitted via the carrier aggregation based on the plurality of carriers, which may enhance the positioning accuracy relative to transmission of the reference signal for positioning using a single carrier.

According to the method for transmitting the reference signal for positioning in embodiments of the disclosure, the reference signal for positioning may be transmitted based on a transmission priority of the reference signal for positioning relative to other channel/signal.

The other channel/signal involved in embodiments of the disclosure may be at least one of:
a synchronization signal and physical broadcast channel (PBCH) block (SSB) of a serving cell, a SSB of a neighbor cell, a physical downlink control channel (PDCCH) and/or a physical downlink shared channel (PDSCH) for an ultra-reliable and low-latency communications (URLLC) service, a PDCCH and/or PDSCH for a service other than the URLLC service, a demodulation reference signal (DMRS), a channel state information (CSI)-reference signal (RS), a physical uplink control channel (PUCCH) and/or a physical uplink shared channel (PUSCH), or a physical random access channel (PRACH).

Further, in an implementation of embodiments of the disclosure, the first information may be configured and sent by a CN device such as an LMF network element. The terminal receives first information from the CN device such as the LMF network element, and determines a first carrier group for transmitting the reference signal for positioning based on the first information.

The transmission priority of the reference signal for positioning relative to transmission of the other channel/signal may be indicated by the network device, and information indicating a transmission priority of the reference signal for positioning relative to transmission of the other channel/signal is referred to as second information.

FIG. 3 is a flowchart illustrating a method for transmitting a reference signal for positioning according to an example embodiment. The method for transmitting the reference signal for positioning may be implemented alone or in combination with other embodiments of the disclosure. As illustrated in FIG. 3, the method for transmitting the reference signal for positioning is applied to a terminal. The method includes the following steps.

At S21, second information is received. The second information indicates a priority for transmission of the reference signal for positioning relative to other channel/signal on each of the at least two carriers.

In embodiments of the disclosure, the second indication information received by the terminal indicates a transmission priority of the reference signal for positioning relative to the other channel/signal, and the reference signal for positioning may be then transmitted based on the priority.

If the priority of the reference signal for positioning is higher than the priority of the other channel/signal, when transmitting the reference signal for positioning overlaps with transmitting the other channel/signal on a time-domain position, the reference signal for positioning may be preferentially transmitted. Alternatively, when a time-domain position occupied by transmission of the other channel/signal on the time domain is before or behind a time-domain position occupied by transmission of the reference signal for positioning, the reference signal for positioning may be preferentially transmitted. Further, transmission of the other channel/signal may be discarded, or performed subsequently.

In embodiments of the disclosure, the terminal may receive the first information for configuring the first carrier group, and receive second information. The second information indicates a priority for transmission of the reference signal for positioning relative to the other channel/signal on each carrier in the first carrier group, and the terminal may transmit the reference signal for positioning based on the priority for transmission of the reference signal for positioning on each carrier when the reference signal for positioning is transmitted via a plurality of carriers.

In an implementation of embodiments of the disclosure, the second information may be configured and sent by a RAN device such as a gNB. The terminal receives second information from the RAN device, and determines a priority for transmission of the reference signal for positioning relative to the other channel/signal on each carrier in the first carrier group based on the second information.

In embodiments of the disclosure, an implementation solution of the priority of the reference signal for positioning is illustrated below in embodiments of the disclosure.

In an implementation, a priority for transmission of the reference signal for positioning on each of the at least two carriers is identical, that is, a priority for transmission of the reference signal for positioning on all carriers in the first carrier group is identical. Taking the downlink reference signal for positioning for example, on one hand, if the priority of the reference signal for positioning is lower than the priority of the other channel/signal, when a transmission conflict occurs, the terminal may not receive the reference signal for positioning on all carriers in the first carrier group. On the other hand, if the priority of the reference signal for positioning is higher than the priority of the other channel/signal, when the transmission conflict occurs, the terminal may receive the reference signal for positioning on all carriers in the first carrier group.

In another implementation, priorities for transmission of the reference signal for positioning on different carriers of the at least two carriers are different, that is, there are carriers with different priorities for transmission of the reference signal for positioning in the first carrier group. In an example, for a priority of a PRS, and a priority of a PDCCH and/or a PDSCH for a URLLC service, they may be different on different carriers. For example, the first carrier group includes a carrier 1 and a carrier 2. On the carrier 1, the priority of the PRS is higher than the priority of the PDCCH and/or the PDSCH for the URLLC service. On the carrier 2, the priority of the PRS is lower than the priority of the PDCCH and/or the PDSCH for the URLLC service, but higher than the priority of the PDCCH and/or the PDSCH for the other service.

Since priorities of the reference signal for positioning on different carriers are different, a high-accuracy positioning may be performed in embodiments of the disclosure. When the reference signal for positioning is transmitted, a carrier with a priority of transmitting the reference signal for positioning that is higher than the priority of transmitting the other channel/signal may be determined from the first carrier group, to transmit the reference signal for positioning.

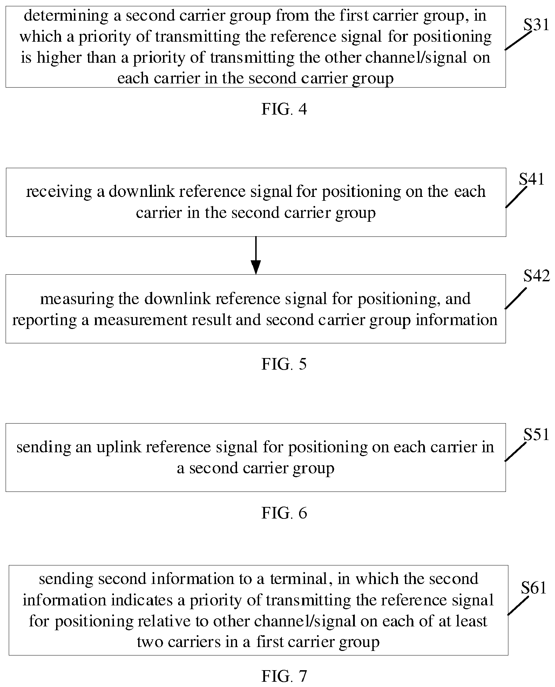

FIG. 4 is a flowchart illustrating a method for transmitting a reference signal for positioning according to an example embodiment. The method for transmitting the reference signal for positioning may be implemented alone or in combination with other embodiments of the disclosure. As illustrated in FIG. 4, the method for transmitting the reference signal for positioning is applied to a terminal. The method includes the following steps.

At S31, a second carrier group is determined from the first carrier group. A priority of transmitting the reference signal for positioning is higher than a priority of transmitting the other channel/signal on each carrier in the second carrier group.

Further, in embodiments of the disclosure, after the second carrier group is determined that has a priority of transmitting the reference signal for positioning higher than the priority of transmitting the other channel/signal, the terminal may transmit the reference signal for positioning based on the second carrier group.

In embodiments of the disclosure, the terminal may further determine whether the reference signal for positioning may be transmitted on the second carrier group determined. For example, the terminal may determine whether to receive the PRS on the second carrier group. Alternatively, the terminal may determine whether to send the SRS on the second carrier group.

In embodiments of the disclosure, a condition for determining whether the reference signal for positioning is transmitted on the second carrier group includes a condition for transmitting the reference signal for positioning or a condition for not transmitting the reference signal for positioning. Whether the reference signal for positioning is transmitted on the second carrier group is determined based on the condition.

In embodiments of the present disclosure, it may be determined that the condition for transmitting the reference signal for positioning includes at least one of:
A: a sum of carrier bandwidths of the second carrier group being greater than or equal to a first threshold value;
B: a ratio of a sum of carrier bandwidths of the second carrier group to a sum of carrier bandwidths of the first carrier group being greater than or equal to a second threshold value;
C: a number of intervals between carriers in the second carrier group being less than or equal to a third threshold value;
D: a frequency domain interval value between carriers in the second carrier group being less than or equal to a fourth threshold value; or
E: there being a combination of carriers for transmitting the reference signal for positioning supported by the terminal in the second carrier group.

Alternatively, in embodiments of the present disclosure, it may be determined that the condition for not transmitting the reference signal for positioning may include at least one of:
A: a sum of carrier bandwidths of the second carrier group being less than a first threshold value;
B: a ratio of a sum of carrier bandwidths of the second carrier group to a sum of carrier bandwidths of the first carrier group being less than a second threshold value;
C: a number of intervals between carriers in the second carrier group being greater than a third threshold value;
D: a frequency domain interval value between carriers in the second carrier group being greater than a fourth threshold value; or
E: there being a combination of carriers for transmitting the reference signal for positioning that is not supported by the terminal in the second carrier group.

In an implementation, in response to the terminal determining the condition for transmitting the reference signal for positioning is satisfied, the reference signal for positioning is transmitted via the second carrier group. Alternatively, in response to the terminal determining the condition for not transmitting the reference signal for positioning is not satisfied, the reference signal for positioning is transmitted via the second carrier group.

In another implementation, in response to the terminal determining the condition for not transmitting the reference signal for positioning is satisfied, transmission of the reference signal for positioning via second carrier group is disabled. Alternatively, in response to the terminal determining the condition for transmitting the reference signal for positioning is not satisfied, transmission of the reference signal for positioning via the second carrier group is disabled.

In embodiments of the disclosure, at least one of the first threshold value, the second threshold value, the third threshold value or the fourth threshold value involved in the step of determining whether the reference signal for positioning is transmitted on the second carrier group may be determined based on one of the following methods.

In a first method, indication information is received from a CN device such as an LMF, and the at least one of the first threshold value, the second threshold value, the third threshold value or the fourth threshold value is determined based on the indication information received from the CN device such as the LMF. The indication information from the CN device such as the LMF may indicate a corresponding threshold value.

In a second method, indication information is received from the RAN device, and the at least one of the first threshold value, the second threshold value, the third threshold value or the fourth threshold value is determined based on the indication information received from the RAN device. The indication information from the RAN device may indicate a corresponding threshold value.

In a third method, the at least one of the first threshold value, the second threshold value, the third threshold value or the fourth threshold value is determined based on a threshold value stored in the terminal. In an example, the at least one of the first threshold value, the second threshold value, the third threshold value or the fourth threshold value may be determined based on a threshold default value specified in a protocol, and the terminal may store the threshold default value in a terminal chip.

In embodiments of the disclosure, when whether the reference signal for positioning is transmitted on the second carrier group is determined based on a carrier combination, the terminal may determine, whether the reference signal for positioning is transmitted on the second carrier group, based on a carrier combination supported or not supported. For example, the terminal reports a plurality of carrier combinations that may be supported, or reports a plurality of carrier combinations that are not supported, for example, a carrier C1, C2......C10 in order from low frequency to high frequency. The reported carrier combination that may be supported by the terminal is: C1C2, C1C2C3, C1C3, C1, C3C4, or the like.

Further, in embodiments of the disclosure, the terminal may select the carrier combination supported by the terminal itself, and send at least one piece of carrier combination information for transmitting the reference signal for positioning, supported by the terminal, to the CN device such as the LMF network element or the RAN device. The carrier combination information includes a carrier combination identifier or a carrier identifier of each carrier included in a carrier combination.

In an example, the terminal supports C1C2 or C2C4, and does not support C1C2C4. However, due to an influence of a priority, a carrier combination that may be used to transmit the reference signal for positioning is C1C2C4. In this case, the terminal may select whether to measure C1C2 or the C2C4 by itself, and reports selected carrier combination information; or, the terminal determines whether to measure C1C2 or C2C4 based on bandwidth sizes of C1C2 and C2C4.

It may be determined that, the reference signal for positioning involved in embodiments of the disclosure may be a downlink reference signal for positioning and/or an uplink reference signal for positioning.

In embodiments of the disclosure, transmission of the uplink reference signal for positioning or the downlink reference signal for positioning is illustrated below.

In an implementation, the reference signal for positioning includes the downlink reference signal for positioning. The downlink reference signal for positioning includes a PRS or other downlink reference signals for positioning, for example, a downlink reference signal for positioning that may be newly introduced in future.

FIG. 5 is a flowchart illustrating a method for transmitting a reference signal for positioning according to an example embodiment. The method for transmitting the reference signal for positioning may be implemented alone or in combination with other embodiments of the disclosure. As illustrated in FIG. 5, the method for transmitting the reference signal for positioning is applied to a terminal. The method includes the following steps.

At S41, a downlink reference signal for positioning is received on the each carrier in the second carrier group.

At S42, the downlink reference signal for positioning is measured, and a measurement result and second carrier group information are reported.

The second carrier group information includes a carrier group identifier and a carrier identifier of the each carrier included in the second carrier group.

In an example, the terminal determines that the measured PRS is received on the each carrier in the second carrier group. The terminal performs the PRS measurement, and reports the measurement result and the second carrier group information.

The terminal may inform the core network device such as the LMF of the carrier group identifier and the carrier identifier in the second carrier group information, at the same time or before or after the RAN device such as the gNB indicates to the terminal the priority (second information) of the reference signal for positioning on the each carrier.

In another implementation, the reference signal for positioning includes an uplink reference signal for positioning. The uplink reference signal for positioning includes a SRS or other downlink reference signals for positioning, for example, a downlink reference signal for positioning that may be newly introduced in future.

FIG. 6 is a flowchart illustrating a method for transmitting a reference signal for positioning according to an example embodiment. The method for transmitting the reference signal for positioning may be implemented alone or in combination with other embodiments of the disclosure. As illustrated in FIG. 6, the method for transmitting the reference signal for positioning is applied to a terminal. The method includes the following steps.

At S5 1, an uplink reference signal for positioning is sent on each carrier in a second carrier group.

In embodiments of the disclosure, the terminal sends the uplink reference signal for positioning on the each carrier in the second carrier group. The RAN device namely the TRP may receive the uplink reference signal for positioning, measure the uplink reference signal for positioning, and report the measurement result.

In embodiments of the disclosure, when the priority of the uplink reference signal for positioning is relatively low, the network device may not need to perform positioning subsequently based on the uplink reference signal for positioning with a low priority, and the terminal may not send the uplink reference signal for positioning, to save a communication overhead.

According to the method for transmitting the reference signal for positioning in embodiments of the disclosure, the reference signal for positioning is transmitted via the carrier aggregation. Through an indication of a transmission priority of the reference signal for positioning on the each carrier of the carrier aggregation, the reference signal for positioning is measured based on the transmission priority and the measurement result is reported , which may enhance the positioning accuracy.

Based on the same conception, a method for transmitting a reference signal for positioning is further provided in embodiments of the disclosure, which is applied to a network device.

In an implementation, the method for transmitting the reference signal for positioning is applied to a RAN device. The RAN device, for example, may be a TRP.

FIG. 7 is a flowchart illustrating a method for transmitting a reference signal for positioning according to an example embodiment. The method for transmitting the reference signal for positioning may be implemented alone or in combination with other embodiments of the disclosure. As illustrated in FIG. 7, the method for transmitting the reference signal for positioning is applied to a RAN device. The method includes the following steps.

At S61, second information is sent to a terminal. The second information indicates a priority of transmitting the reference signal for positioning relative to other channel/signal on each of at least two carriers in a first carrier group.

In an implementation, the other channel/signal includes at least one of:
a SSB of a serving cell, a SSB of a neighbor cell, aPDCCH and/or a PDSCH for a URLLC service, a PDCCH and/or a PDSCH for a service other than the URLLC service, a DMRS, a CSI-RS, a PUCCH and/or a PUSCH, or a PRACH.

In an implementation, a priority for transmission of the reference signal for positioning on each of the at least two carriers is identical. In another implementation, priorities for transmission of the reference signal for positioning on different carriers of the at least two carriers are different.

In embodiments of the disclosure, if priorities for transmission of the reference signal for positioning on different carriers of the at least two carriers are different, the network device may further determine a second carrier group from the first carrier group. A priority of transmitting the reference signal for positioning is higher than a priority of transmitting the other channel/signal on each carrier in the second carrier group.

In embodiments of the disclosure, after the network device determines the second carrier group, whether the reference signal for positioning is transmitted on the second carrier group may be further determined.

In embodiments of the disclosure, a condition for determining whether the reference signal for positioning is transmitted on the second carrier group includes a condition for transmitting the reference signal for positioning or includes a condition for not transmitting the reference signal for positioning. Whether the reference signal for positioning is transmitted on the second carrier group is determined based on the condition.

In embodiments of the present disclosure, it may be determined that the condition for transmitting the reference signal for positioning includes at least one of:
A: a sum of carrier bandwidths of the second carrier group being greater than or equal to a first threshold value;
B: a ratio of a sum of carrier bandwidths of the second carrier group to a sum of carrier bandwidths of the first carrier group being greater than or equal to a second threshold value;
C: a number of intervals between carriers in the second carrier group being less than or equal to a third threshold value;
D: a frequency domain interval value between carriers in the second carrier group being less than or equal to a fourth threshold value; or
E: there being a combination of carriers for transmitting the reference signal for positioning supported by the terminal in the second carrier group.

Alternatively, in embodiments of the present disclosure, it may be determined that the condition for not transmitting the reference signal for positioning may include at least one of:
A: a sum of carrier bandwidths of the second carrier group being less than a first threshold value;
B: a ratio of a sum of carrier bandwidths of the second carrier group to a sum of carrier bandwidths of the first carrier group being less than a second threshold value;
C: a number of intervals between carriers in the second carrier group being greater than a third threshold value;
D: a frequency domain interval value between carriers in the second carrier group being greater than a fourth threshold value; or
E: there being a combination of carriers for transmitting the reference signal for positioning that is not supported by the terminal in the second carrier group.

In an implementation, in response to determining the condition for transmitting the reference signal for positioning is satisfied, the reference signal for positioning is transmitted via the second carrier group. For example, when the sum of the carrier bandwidths of the second carrier group is greater than or equal to the first threshold value, the reference signal for positioning is transmitted via the second carrier group. For another example, when the sum of the carrier bandwidths of the second carrier group is greater than or equal to the first threshold value, and the number of intervals between the carriers in the second carrier group is less than or equal to the third threshold value, the reference signal for positioning is transmitted via the second carrier group.

Alternatively, in response to determining the condition for not transmitting the reference signal for positioning is satisfied, the reference signal for positioning is transmitted via the second carrier group. For example, when there is the combination of the carriers for transmitting the reference signal for positioning supported by the terminal in the second carrier group, the reference signal for positioning is transmitted via the second carrier group. For another example, when the frequency domain interval value between the carriers in the second carrier group is less than or equal to the fourth threshold value, and the number of intervals between the carriers in the second carrier group is greater than or equal to the first threshold value, the reference signal for positioning is transmitted via the second carrier group.

In another implementation, in response to determining the condition for not transmitting the reference signal for positioning is satisfied, transmission of the reference signal for positioning via the second carrier group is disabled. For example, when there is the combination of the carriers for transmitting the reference signal for positioning that is not supported by the terminal in the second carrier group, transmission of the reference signal for positioning via the second carrier group is disabled. For another example, when the frequency domain interval value between the carriers in the second carrier group is greater than the fourth threshold value, and the number of intervals between the carriers in the second carrier group is less than the first threshold value, transmission of the reference signal for positioning via the second carrier group is disabled.

Alternatively, in response to determining the condition for transmitting the reference signal for positioning is not satisfied, transmission of the reference signal for positioning via the second carrier group is disabled. For example, when the ratio of the sum of the carrier bandwidths of the second carrier group to the sum of the carrier bandwidths of the first carrier group is less than the second threshold value, transmission of the reference signal for positioning via the second carrier group is disabled. For another example, when the ratio of the sum of the carrier bandwidths of the second carrier group to the sum of the carrier bandwidths of the first carrier group is less than the second threshold value, and the value of the intervals between the carriers in the second carrier group is greater than the fourth threshold value, transmission of the reference signal for positioning via the second carrier group is disabled. In embodiments of the disclosure, at least one of the first threshold value, the second threshold value, the third threshold value or the fourth threshold value involved in the step of determining whether the reference signal for positioning is transmitted on the second carrier group may be determined based on one of the following methods.

In a first method, indication information is received from a CN device such as an LMF, and the at least one of the first threshold value, the second threshold value, the third threshold value or the fourth threshold value is determined based on the indication information received from the CN device such as the LMF. The indication information from the CN device such as the LMF may indicate a corresponding threshold value.

In a second method, capability information reported by the terminal is received, and the at least one of the first threshold value, the second threshold value, the third threshold value or the fourth threshold value is determined based on the received capability information. The capability information may indicate a corresponding threshold value.

In a third method, the at least one of the first threshold value, the second threshold value, the third threshold value or the fourth threshold value is determined based on a threshold default value specified in a protocol.

It may be determined that, the reference signal for positioning involved in embodiments of the disclosure may be a downlink reference signal for positioning and/or an uplink reference signal for positioning.

In an implementation, the reference signal for positioning includes the downlink reference signal for positioning. The downlink reference signal for positioning includes a PRS or other downlink reference signals for positioning, for example, a downlink reference signal for positioning that may be newly introduced in future.

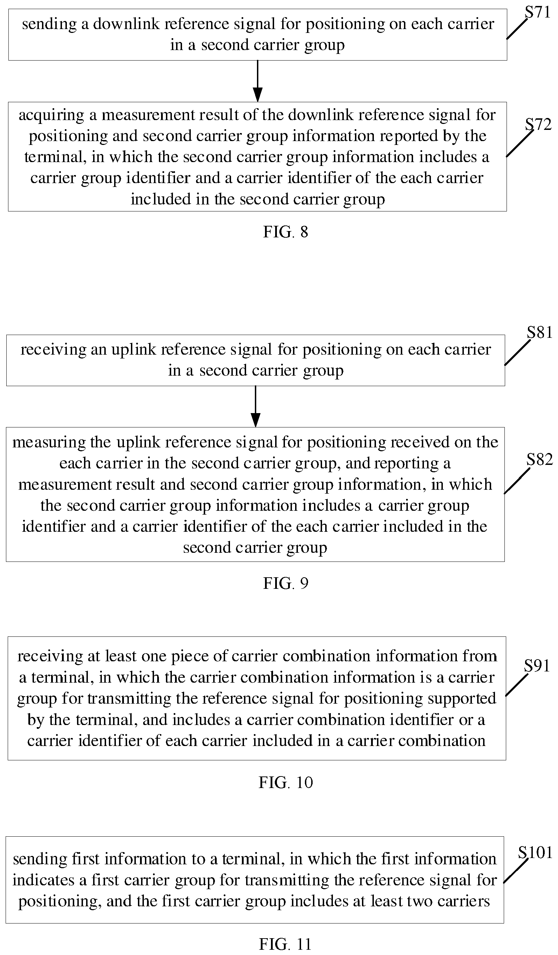

FIG. 8 is a flowchart illustrating a method for transmitting a reference signal for positioning according to an example embodiment. The method for transmitting the reference signal for positioning may be implemented alone or in combination with other embodiments of the disclosure. As illustrated in FIG. 8, the method for transmitting the reference signal for positioning is applied to a RAN device. The method includes the following steps.

At S71, a downlink reference signal for positioning is sent on each carrier in a second carrier group.

At S72, a measurement result of the downlink reference signal for positioning and second carrier group information reported by the terminal are acquired. The second carrier group information includes a carrier group identifier and a carrier identifier of the each carrier included in the second carrier group.

In another implementation, the reference signal for positioning includes an uplink reference signal for positioning. The uplink reference signal for positioning includes a SRS or other downlink reference signals for positioning, for example, a downlink reference signal for positioning that may be newly introduced in future.

FIG. 9 is a flowchart illustrating a method for transmitting a reference signal for positioning according to an example embodiment. The method for transmitting the reference signal for positioning may be implemented alone or in combination with other embodiments of the disclosure. As illustrated in FIG. 9, the method for transmitting the reference signal for positioning is applied to a RAN device. The method includes the following steps.

At S81, an uplink reference signal for positioning is received on each carrier in a second carrier group.

At S82, the uplink reference signal for positioning received on the each carrier in the second carrier group is measured, and a measurement result and second carrier group information are reported. The second carrier group information includes a carrier group identifier and a carrier identifier of the each carrier included in the second carrier group.

In embodiments of the disclosure, the uplink reference signal for positioning received on the each carrier in the second carrier group may be measured by the TRP, and the measurement result and the second carrier group information may be reported.

Further, in embodiments of the disclosure, the RAN device, that is, the TRP, may receive carrier combination information that the terminal itself selects to support. The carrier combination information includes a carrier combination identifier or a carrier identifier of each carrier included in a carrier combination.

FIG. 10 is a flowchart illustrating a method for transmitting a reference signal for positioning according to an example embodiment. The method for transmitting the reference signal for positioning may be implemented alone or in combination with other embodiments of the disclosure. As illustrated in FIG. 10, the method for transmitting the reference signal for positioning is applied to a RAN device. The method includes the following steps.

At S91, at least one piece of carrier combination information is received from a terminal.

The carrier combination information is a carrier group for transmitting the reference signal for positioning supported by the terminal, and includes a carrier combination identifier or a carrier identifier of each carrier included in a carrier combination.

In embodiments of the disclosure, the RAN device determines a carrier combination supported by the terminal based on the carrier combination information from the terminal, and further may transmit the reference signal for positioning based on the carrier combination supported by the terminal.

In embodiments of the disclosure, the RAN device sends priority information of the reference signal for positioning to the terminal, so that the reference signal for positioning may be measured based on the transmission priority and the measurement result may be reported when the reference signal for positioning is transmitted on the each carrier of the carrier aggregation, which enhances the positioning accuracy.

In an implementation, the method for transmitting the reference signal for positioning is applied to a CN device.

FIG. 11 is a flowchart illustrating a method for transmitting a reference signal for positioning according to an example embodiment. The method for transmitting the reference signal for positioning may be implemented alone or in combination with other embodiments of the disclosure. As illustrated in FIG. 7, the method for transmitting the reference signal for positioning is applied to a CN device such as an LMF network element. The method includes the following steps.

At S101, first information is sent to a terminal. The first information indicates a first carrier group for transmitting the reference signal for positioning. The first carrier group includes at least two carriers.

In an implementation, the terminal or the RAN device may report the measurement result when transmitting the reference signal for positioning based on a second carrier group determined from the first carrier group. The CN device such as the LMF acquires a measurement result when transmitting the reference signal for positioning based on the second carrier group, and acquires a carrier group identifier of a second carrier group and a carrier identifier of each carrier included in the second carrier group.

A priority of transmitting the reference signal for positioning is higher than a priority of transmitting the other channel/signal on each carrier in the second carrier group.

Further, in embodiments of the disclosure, the RAN device such as the LMF, may receive carrier combination information that the terminal itself selects to support. The carrier combination information includes a carrier combination identifier or a carrier identifier of each carrier included in a carrier combination.

In embodiments of the present disclosure, the CN device such as the LMF receives at least one piece of carrier combination information from the terminal. The carrier combination information is a carrier group for transmitting the reference signal for positioning supported by the terminal, and includes a carrier combination identifier or a carrier identifier of each carrier included in a carrier combination.

In embodiments of the disclosure, the RAN device such as the LMF determines a carrier combination supported by the terminal based on the carrier combination information from the terminal, so that the reference signal for positioning may be transmitted based on the carrier combination supported by the terminal.

In an implementation, the reference signal for positioning includes a downlink reference signal for positioning and/or an uplink reference signal for positioning.

The downlink reference signal for positioning includes a PRS or other downlink reference signals for positioning, for example, a downlink reference signal for positioning that may be newly introduced in future.

The uplink reference signal for positioning includes a SRS or other downlink reference signals for positioning, for example, a downlink reference signal for positioning that may be newly introduced in future.

In embodiments of the disclosure, the CN device such as the LMF sends first information indicating the first carrier group to the terminal, to achieve transmission of the reference signal for positioning via the carrier aggregation, which enhances the positioning accuracy.

It needs to be noted that, the method in which the RAN device such as the TRP and/or the CN device such as the LMF transmits the reference signal for positioning in embodiments of the disclosure is similar with the method in which the terminal transmits the reference signal for positioning, the details of which may refer to the method in which the terminal transmits the reference signal for positioning.

It needs to be further noted that, the method for transmitting the reference signal for positioning provided in embodiments of the disclosure is applied to a process in which the transmission of the reference signal for positioning is achieved by interactions among the terminal, the RAN device such as the TRP, and the CN device such as the LMF . In such process, the terminal, the RAN device such as the TRP, and the CN device such as the LMF possesses their respective functions of the above embodiments.

It needs to be further noted that, those skilled in the art may understand that various implementations/embodiments involved in embodiments of the present disclosure may be used in combination with the above embodiments, and may be independently used. Whether independently used or used in combination with the above embodiments, the implementation principle is similar. In embodiments of the present disclosure, part of embodiments are illustrated by the implementations used together. It may be understood by those skilled in the art that the examples are not a limitation of embodiments of the present disclosure.

Based on the same conception, an apparatus for transmitting a reference signal for positioning is further provided in embodiments of the present disclosure.

It may be understood that, the apparatus for transmitting the reference signal for positioning provided in embodiments of the present disclosure includes hardware structures and/or software modules that perform corresponding functions in order to achieve the above functions. In combination with modules and algorithm steps of examples described in embodiments of the present disclosure, the embodiments of the present disclosure may be implemented in the form of hardware, or a combination of hardware and computer software. Whether a certain function is executed by the hardware or the computer software driving the hardware depends on specific applications and design constraints of the technical solution. Those skilled in the art may adopt different methods for each specific application scene to implement the described functions, but such implementation should not be considered as going beyond the scope of the technical solutions in embodiments of the present disclosure.

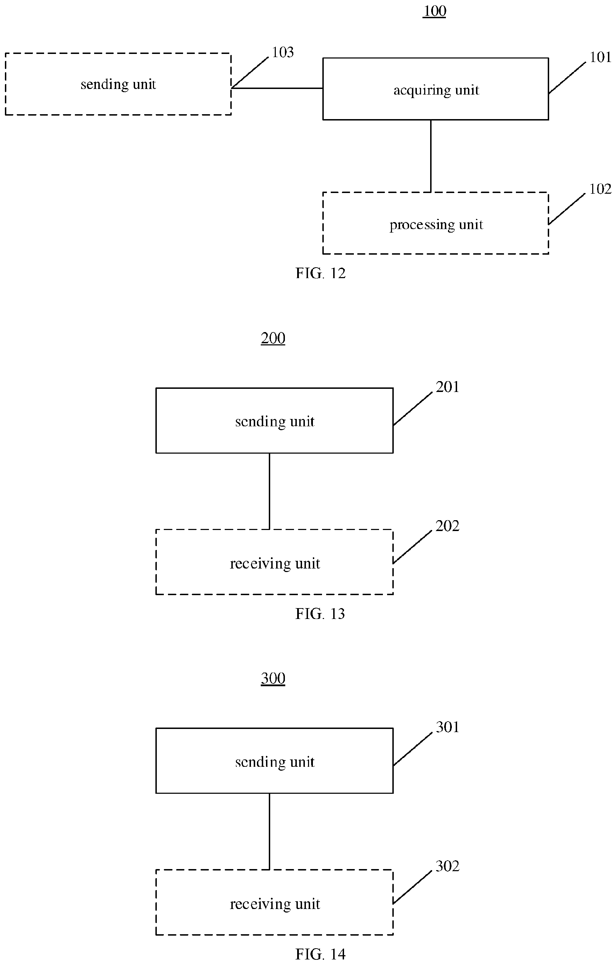

FIG. 12 is a block diagram illustrating an apparatus for transmitting a reference signal for positioning according to an example embodiment. Referring to FIG 12, an apparatus 100 for transmitting a reference signal for positioning is applied to a terminal, and includes an acquiring unit 101.

The acquiring unit 101 is configured to acquire first information. The first information indicates a first carrier group for transmitting the reference signal for positioning. The first carrier group includes at least two carriers.

In an implementation, the acquiring unit 101 is further configured to receive second information. The second information indicates a priority for transmission of the reference signal for positioning relative to other channel/signal on each of the at least two carriers.

In an implementation, a priority for transmission of the reference signal for positioning on each of the at least two carriers is identical.

In another implementation, priorities for transmission of the reference signal for positioning on different carriers of the at least two carriers are different.

In an implementation, the apparatus 100 for transmitting the reference signal for positioning further includes a processing unit 102. The processing unit 102 is configured to: determine a second carrier group from the first carrier group. A priority of transmitting the reference signal for positioning is higher than a priority of transmitting the other channel/signal on each carrier in the second carrier group.

In an implementation, the apparatus 100 for transmitting the reference signal for positioning further includes a processing unit 102. In response to determining a condition for transmitting the reference signal for positioning is satisfied, the processing unit 102 transmits the reference signal for positioning via the second carrier group.

In an implementation, the reference signal for positioning includes a downlink reference signal for positioning. The acquiring unit 101 is configured to receive the downlink reference signal for positioning on the each carrier in the second carrier group. The apparatus 100 for transmitting the reference signal for positioning further includes a sending unit 103. The sending unit 103 is configured to measure the downlink reference signal for positioning, and report a measurement result and second carrier group information. The second carrier group information includes a carrier group identifier and a carrier identifier of the each carrier included in the second carrier group.

In an implementation, the reference signal for positioning includes an uplink reference signal for positioning. The apparatus 100 for transmitting the reference signal for positioning further includes a sending unit 103. The sending unit 103 is configured to send the uplink reference signal for positioning on the each carrier in the second carrier group.

In an implementation, the apparatus 100 for transmitting the reference signal for positioning further includes a processing unit 102. In response to determining a condition for transmitting the reference signal for positioning is not satisfied, the processing unit 102 disables transmission of the reference signal for positioning via the second carrier group.

In an implementation, the condition includes at least one of:
a sum of carrier bandwidths of the second carrier group being greater than or equal to a first threshold value; a ratio of a sum of carrier bandwidths of the second carrier group to a sum of carrier bandwidths of the first carrier group being greater than or equal to a second threshold value; a number of intervals between carriers in the second carrier group being less than or equal to a third threshold value; a frequency domain interval value between carriers in the second carrier group being less than or equal to a fourth threshold value; or there being a combination of carriers for transmitting the reference signal for positioning supported by the terminal in the second carrier group.

In an implementation, the acquiring unit 101 is configured to acquire the first information from a CN device.

In an implementation, the acquiring unit 101 is configured to receive the second information from a RAN device.

In an implementation, the other channel/signal includes at least one of:
a SSB of a serving cell, a SSB of a neighbor cell, aPDCCH and/or a PDSCH for a URLLC service, a PDCCH and/or a PDSCH for a service other than the URLLC service, a DMRS, a CSI-RS, a PUCCH and/or a PUSCH, or a PRACH.

In an implementation, at least one of the first threshold value, the second threshold value, the third threshold value or the fourth threshold value is determined based on one of:
indication information received from a core network device; indication information received from a radio access network device; or a threshold value stored in the terminal.

In an implementation, the apparatus 100 for transmitting the reference signal for positioning further includes a sending unit 103. The sending unit 103 is configured to send at least one piece of carrier combination information for transmitting the reference signal for positioning supported by terminal to a CN device or a RAN device. The carrier combination information includes a carrier combination identifier or a carrier identifier of each carrier included in a carrier combination.

FIG. 13 is a block diagram illustrating an apparatus for transmitting a reference signal for positioning according to an example embodiment. Referring to FIG 13, an apparatus 200 for transmitting a reference signal for positioning is applied to a RAN device, and includes a sending unit 201.

The sending unit 201 is configured to send second information to a terminal. The second information indicates a priority for transmission of the reference signal for positioning relative to other channel/signal on each of at least two carriers in a first carrier group.

In an implementation, a priority for transmission of the reference signal for positioning on each of the at least two carriers is identical.

In another implementation, priorities for transmission of the reference signal for positioning on different carriers of the at least two carriers are different.

In an implementation, the sending unit 201 is further configured to: determine a second carrier group from the first carrier group. A priority of transmitting the reference signal for positioning is higher than a priority of transmitting the other channel/signal on each carrier in the second carrier group.

In an implementation, the sending unit 201 is further configured to: in response to determining a condition for transmitting the reference signal for positioning is satisfied, transmit the reference signal for positioning via the second carrier group.

In an implementation, the reference signal for positioning includes a downlink reference signal for positioning. The sending unit 201 is further configured to send the downlink reference signal for positioning on the each carrier in the second carrier group. The apparatus 200 for transmitting the reference signal for positioning further includes a receiving unit 202. The receiving unit 202 is configured to acquire a measurement result of the downlink reference signal for positioning and second carrier group information reported by the terminal. The second carrier group information includes a carrier group identifier and a carrier identifier of the each carrier included in the second carrier group.

In an implementation, the reference signal for positioning includes an uplink reference signal for positioning. The apparatus 200 for transmitting the reference signal for positioning further includes a receiving unit 202. The receiving unit 202 is configured to receive the uplink reference signal for positioning on the each carrier in the second carrier group. The sending unit 201 is configured to measure the uplink reference signal for positioning received on the each carrier in the second carrier group, and report a measurement result and second carrier group information. The second carrier group information includes a carrier group identifier and a carrier identifier of the each carrier included in the second carrier group.

In an implementation, in response to determining the condition for transmitting the reference signal for positioning is not satisfied, the sending unit 201 disables transmission of the reference signal for positioning via the second carrier group.

In an implementation, the condition includes at least one of: a sum of carrier bandwidths of the second carrier group being greater than or equal to a first threshold value; a ratio of a sum of carrier bandwidths of the second carrier group to a sum of carrier bandwidths of the first carrier group being greater than or equal to a second threshold value; a number of intervals between carriers in the second carrier group being less than or equal to a third threshold value; a frequency domain interval value between carriers in the second carrier group being less than or equal to a fourth threshold value; or there being a combination of carriers for transmitting the reference signal for positioning supported by the terminal in the second carrier group.

In an implementation, the other channel/signal includes at least one of:
a SSB of a serving cell, a SSB of a neighbor cell, aPDCCH and/or a PDSCH for a URLLC service, a PDCCH and/or a PDSCH for a service other than the URLLC service, a DMRS, a CSI-RS, a PUCCH and/or a PUSCH, or a PRACH.

In an implementation, at least one of the first threshold value, the second threshold value, the third threshold value or the fourth threshold value is determined based on one of: indication information received from a core network device; terminal capability information received; or a threshold default value specified in a protocol.

In an implementation, the apparatus 200 for transmitting the reference signal for positioning further includes a receiving unit 202. The receiving unit 202 is configured to receive at least one piece of carrier combination information from the terminal. The carrier combination information is a carrier group for transmitting the reference signal for positioning supported by the terminal, and includes a carrier combination identifier or a carrier identifier of each carrier included in a carrier combination.

FIG. 14 is a block diagram illustrating an apparatus for transmitting a reference signal for positioning according to an example embodiment. Referring to FIG 14, an apparatus 300 for transmitting a reference signal for positioning is applied to a CN device, and includes a sending unit 301.

The sending unit 301 is configured to send first information to a terminal. The first information indicates a first carrier group for transmitting the reference signal for positioning. The first carrier group includes at least two carriers.

In an implementation, the apparatus 300 for transmitting the reference signal for positioning further includes a receiving unit 302. The receiving unit 302 is configured to acquire a measurement result when transmitting the reference signal for positioning based on a second carrier group, and acquire a carrier group identifier of the second carrier group and a carrier identifier of each carrier included in the second carrier group.

In an implementation, a priority of transmitting the reference signal for positioning is higher than a priority of transmitting the other channel/signal on each carrier in the second carrier group.

In an implementation, the apparatus 300 for transmitting the reference signal for positioning further includes a receiving unit 302. The receiving unit 302 is configured to receive at least one piece of carrier combination information from a terminal. The carrier combination information is a carrier group for transmitting the reference signal for positioning supported by the terminal, and includes a carrier combination identifier or a carrier identifier of each carrier included in a carrier combination.

In an implementation, the reference signal for positioning includes a downlink reference signal for positioning and/or an uplink reference signal for positioning.

With regards to the apparatus in the above embodiments, the specific way in which each module performs the operation has been described in embodiments of the method and will not be elaborated here.

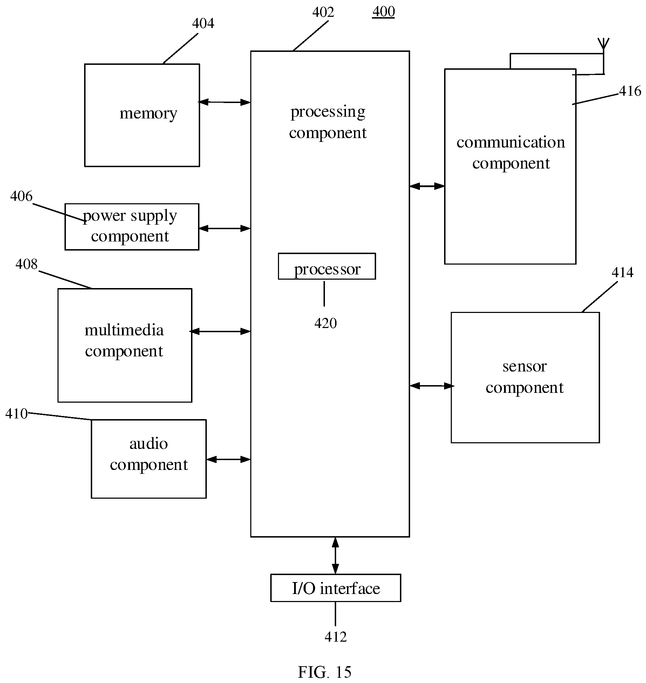

FIG. 15 is a block diagram illustrating a device 400 for transmitting a reference signal for positioning according to an example embodiment. The device 400 may be provided as a terminal. For example, the device 400 may be a mobile phone, a computer, a digital broadcasting terminal, a messaging device, a game console, a tablet device, a medical equipment, a fitness equipment, a personal digital assistant, etc.

As illustrated in FIG. 15, the device 400 may include one or more of a processing component 402, a memory 404, a power supply component 406, a multimedia component 408, an audio component 410, an input/output (I/O) interface 412, a sensor component 414, or a communication component 416.

The processing component 402 generally controls the whole operation of the device 400, such as operations related to display, phone call, data communication, camera operation and recording operation. The processing component 402 may include one or more processors 420 to perform instructions, to complete all or part of steps of the above method. In addition, the processing component 402 may include one or more modules for the convenience of interactions between the processing component 402 and other components. For example, the processing unit 402 may include a multimedia module for the convenience of interactions between the multimedia component 408 and the processing component 402.

The memory 404 is configured to store all types of data to support an operation of the device 400. Examples of the data include the instructions of any application programs or methods operated on the device 400, contact data, phone book data, messages, pictures, videos, etc. The memory 404 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The power supply component 406 may provide power powers for each component of the device 400. The power supply component 406 may include a power supply management system, one or more power supplies, and other units related to generating, managing and distributing powers for the device 400.

The multimedia component 408 includes an output interface screen provided between the device 400 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense a touch action, a slide action and a gesture on the touch panel. The touch sensor may not only sense a boundary of the touch or slide action, but also detect a duration and pressure related to the touch or slide action. In some embodiments, the multimedia component 408 includes a front camera and/or a rear camera. When the device 400 is in an operation mode, such as a shooting mode or a video mode, the front camera and/or the rear camera may receive external multimedia data. Every of the front camera and the rear camera may be a fixed optical lens system or an optical lens system with a focal length and an optical zoom capacity.

The audio component 410 is configured as an output and/or input signal. For example, the audio component 410 includes a microphone (MIC). When the device 400 is in an operation mode, such as a call mode, a record mode, and a speech recognition mode, the microphone is configured to receive the external audio signals. The audio signals received may be further stored in the memory 404 or sent via the communication component 416. In some embodiments, the audio component 410 further includes a speaker configured to output an audio signal.

The I/O interface 412 provides an interface for the processing component 402 and a peripheral interface module, and the peripheral interface module may be a keyboard, a click wheel, a button, etc. The buttons may include but not limited to a home button, a volume button, a start button and a lock button.

The sensor component 414 includes one or more sensors, configured to provide various aspects of status assessment for the device 400. For example, the sensor component 414 may detect an on/off state of the device 400 and a relative positioning of the component. For example, the component is a display and a keypad of the device 400. The sensor component 414 may further detect a location change of the device 400 or one component of the device 400, a presence or absence of a contact between a user and the device 400, an orientation or an acceleration/deceleration of the device 400, and a temperature change of the device 400. The sensor component 414 may include a proximity sensor, which is configured to detect the existence of the objects nearby without any physical contact. The sensor component 414 may further include a light sensor such as a CMOS or CCD image sensor, which is configured to use in imaging applications. In some embodiments, the sensor component 414 may further include an acceleration transducer, a gyroscope sensor, a magnetic sensor, a pressure sensor or a temperature sensor.

The communication component 416 is configured for the convenience of a wire or wireless communication between the device 400 and other devices. The device 400 may access wireless networks based on a communication standard, such as WiFi, 2G or 3G, or their combination. In an example embodiment, the communication component 416 receives broadcast signals or broadcast-related information from an external broadcast management system via a broadcast channel. In an example embodiment, the communication component 416 further includes a near field communication (NFC) module to facilitate a short-range communication. For example, the NFC module may be implemented based on a radio frequency identification (RFID) technology, an infrared data association (IRDA) technology, an ultra-wideband (UWB) technology, Bluetooth (BT) technology and other technologies.

In an example embodiment, the device 400 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-transitory computer-readable storage medium including instructions is further provided, such as the memory 404 including instructions. The instructions may be executed by the processor 420 of the device 400 to complete the above methods. For example, the non-transitory computer readable storage medium may be a ROM, a random access memory (RAM), a CD-ROM, a magnetic tape, a floppy disk, an optical data storage device, etc.

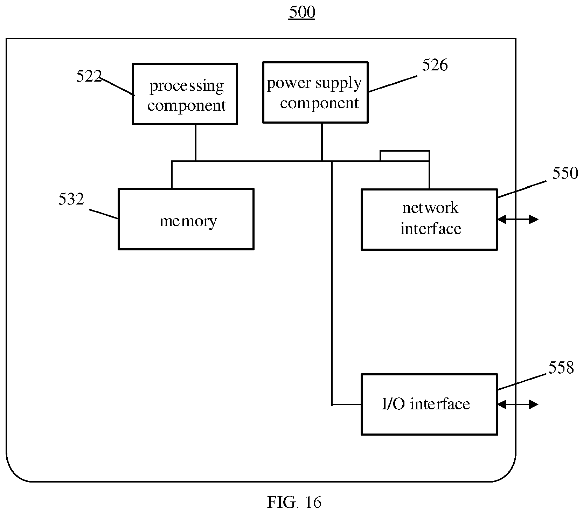

FIG. 16 is a block diagram illustrating a device 500 for transmitting a reference signal for positioning according to an example embodiment. For example, the device 500 may be provided as a RAN device or LMF. Referring to FIG. 16, the device 500 includes a processing component 522, which further includes one or more processors, and memory resources represented by a memory 532, which are configured to store instructions executable by the processing component 522, for example, an application program. The application program stored in the memory 532 may include one or more modules, each of which corresponds to a set of instructions. In addition, the processing component 522 is configured to execute instructions, to perform the above method.

The device 500 may further include a power supply component 526 configured to execute power management of the device 500, and a wired or wireless network interface 550 configured to connect the device 500 to a network, and an I/O interface 558. The device 500 may be operated in an operating system stored in the memory 532, for example, Windows Server^{™}, Mac OS X^{™}, Unix^{™}, Linux^{™}, and FreeBSD^{™}.

In an example embodiment, the device 500 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-transitory computer-readable storage medium including instructions is further provided, for example, the memory 532 including instructions. The instructions may be executed by the processing component 522 of the device 500 to complete the above methods. For example, the non-transitory computer readable storage medium may be a ROM, a random access memory (RAM), a CD-ROM, a magnetic tape, a floppy disk, an optical data storage device, etc.

It may be further understood that, "a plurality of' in the present disclosure means two or above, which is similar to other quantifiers. The term "and/or" describes a relationship between association objects, indicating that there may exist three relationships. For example, A and/or B, may represent any of: existing A only, existing both A and B, or existing B only. The character "/" generally means that a contextual object is in a kind of "or" relationship. The singular forms "a/an", "the" and "said" are also intended to include plural forms, unless the context clearly indicates otherwise.

It should be understood that, the terms "first", "second", etc. are configured to describe various information, but the information shall not be limited to the terms. The terms are only used to distinguish the same category of information, rather than indicate a particular order or degree of importance. Actually, the terms "first", "second", etc. may be completely used interchangeably. For example, without departing from the scope of this present disclosure, first information may also be referred to as second information, and similarly, second information may also be referred to as first information.

It may be further understood that, in embodiments of the disclosure, although operations are described in a particular order in the accompanying drawings, it should not be construed as requiring that the operations be performed in a particular or serial order as shown, or that the operations shown be performed in their entirety to obtain a desired result. In a certain environment, multitasking and parallel processing may be advantageous.

After considering the specification and practicing the disclosure here, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure.

It should be understood that the present disclosure is not limited to the precise structure described above and shown in the drawings, and various modifications and changes may be made without departing from its scope. The scope of the present application is only limited by the appended claims. Range of the present disclosure is only limited by the appended claims.

## Claims

1. A method for transmitting a reference signal for positioning, applied to a terminal, comprising:
acquiring first information, wherein the first information indicates a first carrier group for transmitting the reference signal for positioning, and the first carrier group comprises at least two carriers.

2. The method according to claim 1, further comprising:
receiving second information, wherein the second information indicates a priority for transmission of the reference signal for positioning relative to other channel/signal on each of the at least two carriers.

3. The method according to claim 2, wherein a priority for transmission of the reference signal for positioning on each of the at least two carriers is identical.

4. The method according to claim 2, wherein priorities for transmission of the reference signal for positioning on different carriers of the at least two carriers are different.

5. The method according to claim 4, further comprising:
determining a second carrier group from the first carrier group, wherein a priority of transmitting the reference signal for positioning is higher than a priority of transmitting the other channel/signal on each carrier in the second carrier group.

6. The method according to claim 5, further comprising:
in response to determining a condition for transmitting the reference signal for positioning is satisfied, transmitting the reference signal for positioning via the second carrier group.

7. The method according to claim 6, wherein the reference signal for positioning comprises a downlink reference signal for positioning, and transmitting the reference signal for positioning via the second carrier group comprises:
receiving the downlink reference signal for positioning on the each carrier in the second carrier group; and
measuring the downlink reference signal for positioning, and reporting a measurement result and second carrier group information, wherein the second carrier group information comprises a carrier group identifier and a carrier identifier of the each carrier comprised in the second carrier group.

8. The method according to claim 6, wherein the reference signal for positioning comprises an uplink reference signal for positioning, and transmitting the reference signal for positioning via the second carrier group comprises:
transmitting the uplink reference signal for positioning on the each carrier in the second carrier group.

9. The method according to claim 5, further comprising:
in response to determining a condition for transmitting the reference signal for positioning is not satisfied, disabling transmission of the reference signal for positioning via the second carrier group.

10. The method according to claim 6 or 9, wherein the condition comprises at least one of:
a sum of carrier bandwidths of the second carrier group being greater than or equal to a first threshold value;
a ratio of a sum of carrier bandwidths of the second carrier group to a sum of carrier bandwidths of the first carrier group being greater than or equal to a second threshold value;
a number of intervals between carriers in the second carrier group being less than or equal to a third threshold value;
a frequency domain interval value between carriers in the second carrier group being less than or equal to a fourth threshold value; or
there being a combination of carriers for transmitting the reference signal for positioning supported by the terminal in the second carrier group.

11. The method according to claim 1, wherein acquiring the first information comprises:
acquiring the first information from a core network (CN) device.

12. The method according to claim 2, wherein receiving the second information comprises:
receiving the second information from a radio access network (RAN) device.

13. The method according to claim 2, wherein the other channel/signal comprises at least one of:
a synchronization signal and physical broadcast channel (PBCH) block (SSB) of a serving cell, a SSB of a neighbor cell, a physical downlink control channel (PDCCH) and/or a physical downlink shared channel (PDSCH) for an ultra-reliable and low latency communications (URLLC) service, a PDCCH and/or a PDSCH for a service other than the URLLC service, a demodulation reference signal (DMRS), a channel state information reference signal (CSI-RS), a physical uplink control channel (PUCCH) and/or a physical uplink shared channel (PUSCH), or a physical random access channel (PRACH).

14. The method according to claim 10, wherein at least one of the first threshold value, the second threshold value, the third threshold value or the fourth threshold value is determined based on one of:
indication information received from a core network (CN) device;
indication information received from a radio access network (RAN) device; or
a threshold value stored in the terminal.

15. The method according to claim 1, further comprising:
sending at least one piece of carrier combination information for transmitting the reference signal for positioning supported by the terminal to a core network (CN) device or a radio access network (RAN) device, wherein the carrier combination information comprises a carrier combination identifier or a carrier identifier of each carrier comprised in a carrier combination.

16. A method for transmitting a reference signal for positioning, applied to a radio access network (RAN) device, comprising:
sending second information to a terminal, wherein the second information indicates a priority for transmission of the reference signal for positioning relative to other channel/signal on each of at least two carriers in a first carrier group.

17. The method according to claim 16, wherein a priority for transmission of the reference signal for positioning on each of the at least two carriers is identical.

18. The method according to claim 16, wherein priorities for transmission of the reference signal for positioning on different carriers of the at least two carriers are different.

19. The method according to claim 18, further comprising:
determining a second carrier group from the first carrier group, wherein a priority of transmitting the reference signal for positioning is higher than a priority of transmitting the other channel/signal on each carrier in the second carrier group.

20. The method according to claim 19, further comprising:
in response to determining a condition for transmitting the reference signal for positioning is satisfied, transmitting the reference signal for positioning via the second carrier group.

21. The method according to claim 20, wherein the reference signal for positioning comprises a downlink reference signal for positioning, and transmitting the reference signal for positioning via the second carrier group comprises:
sending the downlink reference signal for positioning on the each carrier in the second carrier group; and
acquiring second carrier group information reported by the terminal, wherein the second carrier group information comprises a carrier group identifier and a carrier identifier of the each carrier comprised in the second carrier group.

22. The method according to claim 20, wherein the reference signal for positioning comprises an uplink reference signal for positioning, and transmitting the reference signal for positioning via the second carrier group comprises:
receiving the uplink reference signal for positioning on the each carrier in the second carrier group; and
measuring the uplink reference signal for positioning received on the each carrier in the second carrier group, and reporting a measurement result and second carrier group information, wherein the second carrier group information comprises a carrier group identifier and a carrier identifier of the each carrier comprised in the second carrier group.

23. The method according to claim 19, further comprising:
in response to determining a condition for transmitting the reference signal for positioning is not satisfied, disabling transmission of the reference signal for positioning via the second carrier group.

24. The method according to claim 20 or 23, wherein the condition comprises at least one of:
a sum of carrier bandwidths of the second carrier group being greater than or equal to a first threshold value;
a ratio of a sum of carrier bandwidths of the second carrier group to a sum of carrier bandwidths of the first carrier group being greater than or equal to a second threshold value;
a number of intervals between carriers in the second carrier group being less than or equal to a third threshold value;
a frequency domain interval value between carriers in the second carrier group being less than or equal to a fourth threshold value; or
there being a combination of carriers for transmitting the reference signal for positioning supported by the terminal in the second carrier group.

25. The method according to claim 16, wherein the other channel/signal comprises at least one of:
a synchronization signal and physical broadcast channel (PBCH) block (SSB) of a serving cell, a SSB of a neighbor cell, a physical downlink control channel (PDCCH) and/or a physical downlink shared channel (PDSCH) for an ultra-reliable and low latency communications (URLLC) service, a PDCCH and/or a PDSCH for a service other than the URLLC service, a demodulation reference signal (DMRS), a channel state information reference signal (CSI-RS), a physical uplink control channel (PUCCH) and/or a physical uplink shared channel (PUSCH), or a physical random access channel (PRACH).

26. The method according to claim 24, wherein at least one of the first threshold value, the second threshold value, the third threshold value or the fourth threshold value is determined based on one of:
indication information received from a core network (CN) device;
terminal capability information received; or
a threshold default value specified in a protocol.

27. The method according to claim 16, further comprising:
receiving at least one piece of carrier combination information from the terminal, wherein the carrier combination information is a carrier group for transmitting the reference signal for positioning supported by the terminal, and comprises a carrier combination identifier or a carrier identifier of each carrier comprised in a carrier combination.

28. A method for transmitting a reference signal for positioning, applied to a core network (CN) device, comprising:
sending first information to a terminal, wherein the first information indicates a first carrier group for transmitting the reference signal for positioning, and the first carrier group comprises at least two carriers.

29. The method according to claim 28, further comprising:
acquiring a measurement result when transmitting the reference signal for positioning based on a second carrier group, and acquiring a carrier group identifier of the second carrier group and a carrier identifier of each carrier comprised in the second carrier group.

30. The method according to claim 29, wherein a priority of transmitting the reference signal for positioning is higher than a priority of transmitting the other channel/signal on each carrier in the second carrier group.

31. The method according to claim 28, further comprising:
receiving at least one piece of carrier combination information from the terminal, wherein the carrier combination information is a carrier group for transmitting the reference signal for positioning supported by the terminal, and comprises a carrier combination identifier or a carrier identifier of each carrier comprised in the carrier combination.

32. The method according to any one of claims 28 to 31, wherein the reference signal for positioning comprises a downlink reference signal for positioning and/or an uplink reference signal for positioning.

33. An apparatus for transmitting a reference signal for positioning, comprising:
an acquiring unit, configured to acquire first information, wherein the first information indicates a first carrier group for transmitting the reference signal for positioning, and the first carrier group comprises at least two carriers.

34. The apparatus according to claim 33, wherein the acquiring unit is further configured to receive second information, and the second information indicates a priority for transmission of the reference signal for positioning relative to other channel/signal on each of the at least two carriers.

35. An apparatus for transmitting a reference signal for positioning, comprising:
a sending unit, configured to send second information to a terminal, wherein the second information indicates a priority for transmission of the reference signal for positioning relative to other channel/signal on each of at least two carriers in a first carrier group.

36. An apparatus for transmitting a reference signal for positioning, comprising:
a sending unit, configured to send first information to a terminal, wherein the first information indicates a first carrier group for transmitting the reference signal for positioning, and the first carrier group comprises at least two carriers.

37. A device for transmitting a reference signal for positioning, comprising:
a processor; and
a memory for storing instructions executable by a processor;
wherein the processor is configured to perform the method according to any one of claims 1 to 15, or perform the method according to any one of claims 16 to 27, or perform the method according to any one of claims 28 to 32.

38. A storage medium storing instructions, wherein when the instructions in the storage medium are executed by a processor, the method according to any one of claims 1 to 15 is implemented, or the method according to any one of claims 16 to 27 is implemented, or the method according to any one of claims 28 to 32 is implemented.
